# EUROPÄISCHE PATENTSCHRIFT

(11) **EP 3 870 493 B1**
(45) Veröffentlichungstag und Bekanntmachung des Hinweises auf die Patenterteilung: **12.10.2022**
(21) Anmeldenummer: 19798181.4
(22) Anmeldetag: 21.10.2019
(51) Int. Cl.: B61H 7/08, B61H 13/36, B60T 13/66

(54) **AUFHÄNGEVORRICHTUNG FÜR EINE MAGNETSCHIENENBREMSE, MAGNETSCHIENENBREMSEINRICHTUNG, SCHIENENFAHRZEUG UND VERFAHREN ZUM ÄNDERN EINER POSITION**
SUSPENSION DEVICE FOR A MAGNETIC RAIL BRAKE, MAGNETIC RAIL BRAKE DEVICE, RAIL VEHICLE AND METHOD FOR CHANGING A POSITION
ARRANGEMENT DE SUSPENSION POUR UN FREIN ÉLECTROMAGNÉTIQUE SUR RAIL, DISPOSITIF DE FREIN ÉLECTROMAGNÉTIQUE SUR RAIL, VÉHICULE FERROVIAIRE ET PROCÉDÉ DE CHANGEMENT DE POSITION

(30) Priorität: 22.10.2018 DE 102018126155
(43) Veröffentlichungstag der Anmeldung: 01.09.2021
(73) Patentinhaber: Knorr-Bremse Gesellschaft mit beschränkter Haftung, 2340 Mödling (AT)
(72) Erfinder: WECHSELBERGER, Christoph, 4863 Seewalchen am Attersee (AT); RATHAMMER, Richard, 2262 Stillfried-Grub (AT); QAFLESHI, Gjelbrim, 1140 Wien (AT)
(74) Vertreter: Aurigium Leischner & Luthe
(86) Internationale Anmeldenummer: PCT/EP2019/078483
(87) Internationale Veröffentlichungsnummer: WO 2020/083804

(56) Entgegenhaltungen:
- CH-A- 546 168
- US-A- 3 958 669

## Beschreibung

Die vorliegende Erfindung bezieht sich auf eine Aufhängevorrichtung für eine Magnetschienenbremse für ein Schienenfahrzeug, eine Magnetschienenbremseinrichtung mit einer Aufhängevorrichtung, ein Schienenfahrzeug mit einer Magnetschienenbremseinrichtung und ein Verfahren zum Ändern einer Position einer Anbindungseinrichtung einer Aufhängevorrichtung.

Magnetschienenbremsen an Schienenfahrzeugen werden beim Bremsen elektromagnetisch an die Schienen angezogen. Unter Ausnutzung der Reibung zwischen dem Magnet der Magnetschienenbremse und der Schiene wird eine Bremskraft aufgebaut. Magnetschienenbremsen werden sowohl im Vollbahnverkehr als auch in Metro- und Straßenbahnsystemen des Nahverkehrs eingesetzt. Im Nahverkehrsbereich bei Straßen- oder Stadtbahnen hängen die Bremsmagnete im Standardfall mittels einer Tiefaufhängung an Zug- oder Druckfedern in einem definierten Abstand über der Fahrschiene. Im Bremsfall wird die Spule elektrisch erregt und der Magnet zieht sich gegen die Wirkung der Aufhängefedern selbsttätig an die Schiene an. Nach dem Abschalten des Erregerstromes ziehen die Aufhängefedern den Magneten wieder in die Bereitschaftsstellung zurück. Aufgrund von Verschleiß an den Rädern des Schienenfahrzeugs sowie an den Magnetschienenbremsen selbst ändert sich mit der Zeit ein Abstand zwischen der Magnetschienenbremse und der Fahrschiene. Die US 3 958 669 A offenbart eine Aufhängevorrichtung für Schienenbremsmagnete. Die CH 546 168 A offenbart eine Aufhängungsvorrichtung für eine Magnetschienenbremse an Eisenbahnfahrzeugen.

Vor diesem Hintergrund ist es die Aufgabe der vorliegenden Erfindung eine verbesserte Aufhängevorrichtung für eine Magnetschienenbremse für ein Schienenfahrzeug, eine Magnetschienenbremseinrichtung mit einer verbesserten Aufhängevorrichtung, ein Schienenfahrzeug mit einer verbesserten Magnetschienenbremseinrichtung und ein verbessertes Verfahren zum Ändern einer Position einer Anbindungseinrichtung einer Aufhängevorrichtung zu schaffen.

Diese Aufgabe wird durch eine Aufhängevorrichtung mit den Merkmalen des Vorrichtungsanspruchs 1, durch eine Magnetschienenbremseinrichtung nach Anspruch 8, durch ein Schienenfahrzeug nach Anspruch 9 und ein Verfahren nach Anspruch 10 gelöst.

Die mit der vorgestellten Erfindung erreichbaren Vorteile bestehen darin, dass eine Aufhängevorrichtung geschaffen wird, die eine sichere und dennoch einfach lösbare und höhenverstellbare Aufhängung einer Magnetschienenbremse ermöglicht.

Eine Aufhängevorrichtung für eine Magnetschienenbremse für ein Schienenfahrzeug weist einen Gewindebolzen mit einem Langloch, eine Anbindungseinrichtung und eine Einstellmutter auf. Die Anbindungseinrichtung ist zum Anbinden der Magnetschienenbremse ausgeformt, und weist eine erste Durchgangsöffnung zum Durchführen des Gewindebolzens auf. Die Einstellmutter weist ein Innengewinde auf, das an den Gewindebolzen schraubbar ausgeformt ist, um eine Position der Anbindungseinrichtung an dem Gewindebolzen axial verstellbar zu machen, wobei die Einstellmutter zum drehsicheren Fixieren der Einstellmutter an dem Gewindebolzen zumindest eine zweite Durchgangsöffnung zum Aufnehmen eines durch das Langloch durchführbaren Steckelements aufweist.

Die Aufhängevorrichtung kann im Montagezustand an einem Schienenfahrzeug ein bekanntes Prinzip einer Tiefaufhängung einer Magnetschienenbremse an Zug- oder Druckfedern realisieren. Vorteilhafterweise ist ein Abstand der Magnetschienenbremse zu der Schiene dank der hier vorgestellten Aufhängevorrichtung sehr schnell und einfach justierbar, da lediglich eine einfach lösbare formschlüssige Verbindung mit dem Steckelement ein Drehen der Einstellmutter zum Ändern der Position der Anbindungseinrichtung und somit der Magnetschienenbremse verhindert.

Die Aufhängevorrichtung kann auch das Steckelement aufweisen, das in einem durch die zweite Durchgangsöffnung und das Langloch durchgeführten Fixierzustand dazu ausgebildet ist, um ein Drehen der Einstellmutter zu verhindern. Bei dem Steckelement kann es sich um ein einschenkliges Element wie einen Bolzen oder einen Stift oder um ein mehrschenkliges Federelement wie eine Klammer oder Klemme handeln. Derartige Steckelemente sind kostengünstig erhältlich und ermöglichen das formschlüssige drehsichere Fixieren der Einstellmutter an dem Gewindebolzen durch ein einfaches Einschieben.

Das Steckelement kann beispielsweise als ein Schenkel eines Federsteckers ausgeformt sein. Ein weiterer Schenkel des beispielsweise zweischenkligen Federsteckers kann hierbei vorteilhafterweise im Fixierzustand des Steckelements an oder gegen eine Schlüsselfläche der Einstellmutter geklemmt angeordnet sein, wodurch das Steckelement sicher in dem Fixierzustand gehalten werden kann. Als die Schlüsselfläche der Einstellmutter ist jene Fläche zu verstehen, welche beim Schrauben der Einstellmutter von einem Werkzeug oder Schlüssel kontaktiert wird oder kontaktiert werden kann. Bei der Schlüsselfläche kann es sich beispielsweise um eine mehrkantige, beispielsweise sechskantige, äußere Umlaufwand der Einstellmutter handeln, welche folglich eine Sechskantmutter sein kann.

Von Vorteil ist es weiterhin, wenn die Einstellmutter eine Nut zum Anlegen des oder eines weiteren Schenkels des Federsteckers aufweist. Somit kann der weitere Schenkel nicht nur kraft-, sondern auch formschlüssig an der Einstellmutter gehalten werden. Die Nut kann in einen Schlüsselflächenabschnitt der Schlüsselfläche der Einstellmutter oder aber auch umlaufend in der Schlüsselfläche angeordnet sein. Die Nut kann beispielsweise mittig in der Schlüsselfläche und zusätzlich oder alternativ ringförmig um die Innengewindebohrung der Einstellmutter angeordnet sein.

Gemäß einer Ausführungsform weist ein Außengewinde des Gewindebolzens und zusätzlich oder alternativ das Innengewinde der Einstellmutter eine Gewindesteigung von zwei Millimetern auf. Die Gewindesteigung kann innerhalb eines Toleranzbereichs von 20 Prozent von den zwei Millimetern abweichen. Auch das Innengewinde der Einstellmutter kann die Gewindesteigung von zwei Millimetern innerhalb des Toleranzbereichs aufweisen. Somit ist ein feines Justieren der Anbindungseinrichtung ermöglicht. Alternativ kann der Gewindebolzen ein Feingewinde mit einer Gewindesteigung von 1,5 Millimetern oder eine andere geeignete Gewindesteigung aufweisen.

Die Aufhängevorrichtung kann einen weiteren Gewindebolzen mit einem weiteren Langloch, eine weitere Anbindungseinrichtung zum Anbinden der Magnetschienenbremse zwischen der Anbindungseinrichtung und der weiteren Anbindungseinrichtung, die eine dritte Durchgangsöffnung zum Durchführen des weiteren Gewindebolzens aufweist, und eine weitere Einstellmutter mit einem weiteren Innengewinde aufweisen, das an den weiteren Gewindebolzen schraubbar ausgeformt ist, um eine weitere Position der weiteren Anbindungseinrichtung an dem weiteren Gewindebolzen axial verstellbar zu machen. Die weitere Einstellmutter kann zum drehsicheren Fixieren der weiteren Einstellmutter an dem weiteren Gewindebolzen zumindest eine vierte Durchgangsöffnung zum Aufnehmen eines durch das weitere Langloch durchführbaren weiteren Steckelements aufweisen. Die Magnetschienenbremse ist somit zwischen zwei Anbindungseinrichtungen anordenbar, wobei ein Abstand der Magnetschienenbremse zu der Schiene vorteilhafterweise an zwei beispielsweise gegenüberliegenden Seiten der Magnetschienenbremse schnell und einfach veränderbar ist.

Eine Magnetschienenbremseinrichtung weist eine Magnetschienenbremse und eine Aufhängevorrichtung auf, die in einer der vorangehend vorgestellten Varianten ausgeformt ist. Die Magnetschienenbremse ist zwischen der Anbindungseinrichtung und der weiteren Anbindungseinrichtung angeordnet oder anordenbar. Eine derartige Magnetschienenbremseinrichtung ermöglicht dank der Aufhängevorrichtung ein schnelles und einfaches Ändern oder Nachstellen einer Höhe der Magnetschienenbremse an dem Gewindebolzen.

Es wird weiterhin ein Schienenfahrzeug vorgestellt, welches die vorangehend vorgestellte Magnetschienenbremseinrichtung aufweist. Bei dem Schienenfahrzeug ist dank der Magnetschienenbremseinrichtung ein Abstand der Magnetschienenbremse zu der Schiene schnell und einfach anpassbar. Ein solches Nachjustieren des Abstands ist insbesondere nach einem Verschleiß der Räder des Schienenfahrzeugs und zusätzlich oder alternativ einem Verschleiß der Magnetschienenbremse selbst notwendig.

Ein Verfahren zum Ändern einer Position einer Anbindungseinrichtung einer der vorangehend vorgestellten Aufhängevorrichtungen weist einen Schritt des Herausziehens, einen Schritt des Drehens und einen Schritt des Einsteckens auf. Im Schritt des Herausziehens wird das Steckelement aus der zweiten Durchgangsöffnung der Einstellmutter und dem Langloch des Gewindebolzens herausgezogen. Im Schritt des Drehens wird die Einstellmutter an eine gewünschte Position an dem Gewindebolzen gedreht, um die Position der Anbindungseinrichtung zu verändern. Im Schritt des Einsteckens wird das Steckelement in die zweite Durchgangsöffnung und das Langloch eingesteckt, um die Einstellmutter drehsicher an dem Gewindebolzen zu fixieren. Dieses Verfahren ist vorteilhafterweise unter geringem Kraftaufwand, sehr schnell und unter Verwendung von wenigen Werkzeugen möglich.

Ausführungsbeispiele der hier vorgestellten Erfindung werden in der nachfolgenden Beschreibung mit Bezug zu den Figuren näher erläutert. Es zeigen:
Fig. 1 bis 4 je eine perspektivische Seitendarstellung einer Aufhängevorrichtung für eine Magnetschienenbremse für ein Schienenfahrzeug gemäß einem Ausführungsbeispiel;
Fig. 5 eine schematische seitliche Darstellung eines Schienenfahrzeugs mit einer Magnetschienenbremseinrichtung mit einer Aufhängevorrichtung gemäß einem Ausführungsbeispiel; und
Fig. 6 ein Ablaufdiagramm eines Verfahrens zum Ändern einer Position einer Anbindungseinrichtung einer Aufhängevorrichtung gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

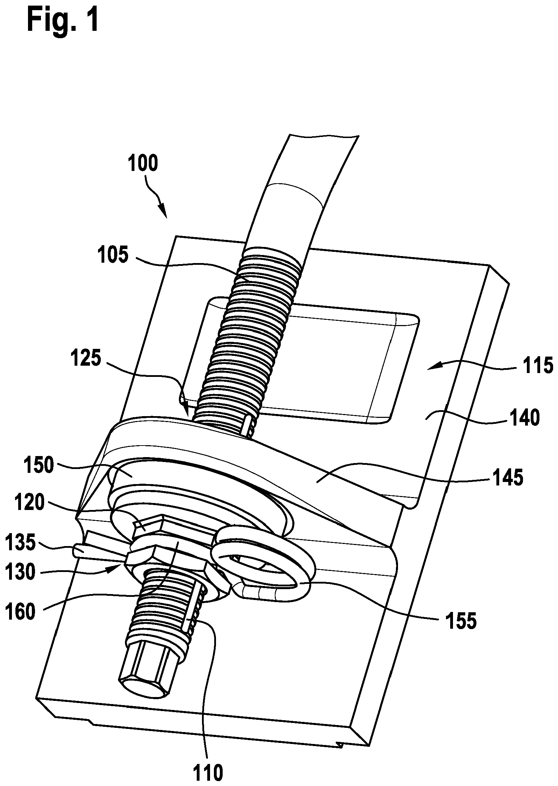

**Fig. 1** zeigt eine perspektivische Seitendarstellung einer Aufhängevorrichtung 100 für eine Magnetschienenbremse für ein Schienenfahrzeug gemäß einem Ausführungsbeispiel.

Die Aufhängevorrichtung 100 ist dazu ausgeformt, um eine Magnetschienenbremse für ein Schienenfahrzeug aufzuhängen, gemäß einem Ausführungsbeispiel in Tiefaufhängung. Hierzu weist die Aufhängevorrichtung 100 einen Gewindebolzen 105 mit einem Langloch 110, eine Anbindungseinrichtung 115 und eine Einstellmutter 120 auf. Die Anbindungseinrichtung 115 ist zum Anbinden oder Koppeln der Magnetschienenbremse ausgeformt und weist eine erste Durchgangsöffnung 125 zum Durchführen des Gewindebolzens 105 auf. Die Einstellmutter 120 weist ein durchgängiges Gewindeloch mit einem Innengewinde auf, das an den Gewindebolzen 105 schraubbar ausgeformt ist, um eine Position der Anbindungseinrichtung 115 an dem Gewindebolzen 105 axial verstellbar zu machen. Um die Einstellmutter 120 im auf den Gewindebolzen 105 aufgeschraubten Zustand drehsicher an dem Gewindebolzen 105 fixieren zu können, weist die Einstellmutter 120 zumindest eine zweite Durchgangsöffnung 130 zum Aufnehmen eines durch das Langloch 110 durchführbaren Steckelements 135 auf.

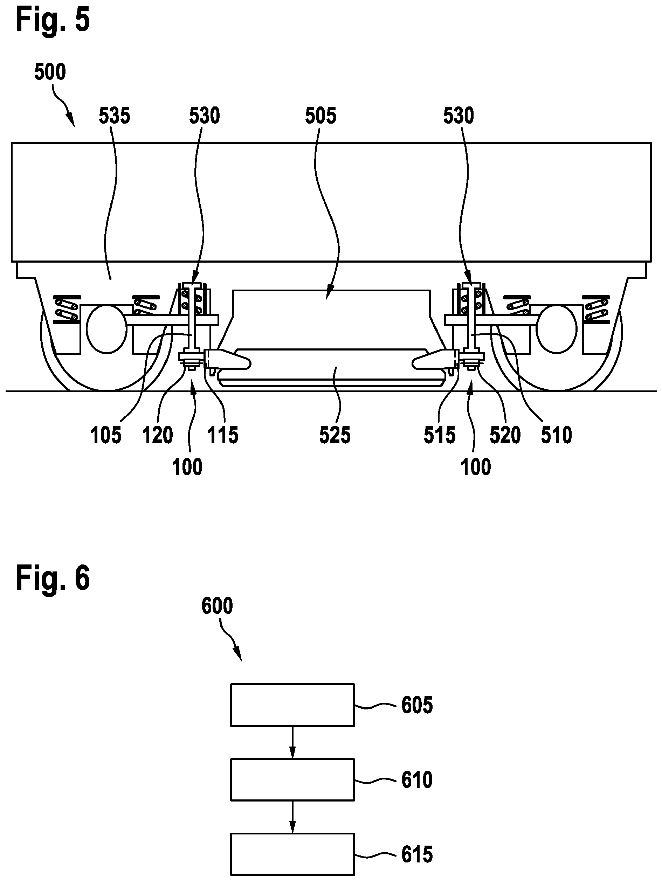

Gemäß diesem Ausführungsbeispiel ist der Gewindebolzen 105 durch die erste Durchgangsöffnung 125 der Anbindungseinrichtung 115 durchgeführt angeordnet. Die Anbindungseinrichtung 115 weist gemäß diesem Ausführungsbeispiel ein plattenförmiges und/oder rechteckiges Anschlusselement 140 und einen sich senkrecht von dem Anschlusselement 140 weg erstreckenden Vorsprung 145 auf. Die erste Durchgangsöffnung 125 ist in dem Vorsprung 145 angeordnet. Eine dem Vorsprung 145 abgewandte Seite des Anschlusselements 140 ist im Montagezustand der Aufhängevorrichtung 100 mit der Magnetschienenbremse der Magnetschienenbremse zugewandt angeordnet und/oder mit dieser gekoppelt. Siehe hierzu auch Figur 5. In dem hier gezeigten Aufnahmezustand des Gewindebolzens 105 durch die erste Durchgangsöffnung 125 erstreckten sich der Gewindebolzen 105 und das Anschlusselement 140 parallel zueinander. Gemäß diesem Ausführungsbeispiel ist durch die erste Durchgangsöffnung 125 außerdem eine optionale Hülse 150 hindurchgeführt angeordnet, durch welche wiederum der Gewindebolzen 105 hindurchgeführt angeordnet ist. Gemäß einem alternativen Ausführungsbeispiel ist zusätzlich oder alternativ zwischen dem Vorsprung 145 und der Einstellmutter 120 eine Unterlegscheibe angeordnet oder eingespannt. Die Einstellmutter 120 weist gemäß diesem Ausführungsbeispiel auf einer dem Vorsprung 145 zugewandten Seite einen Flansch auf, der an der Hülse 150 anliegt.

Gemäß diesem Ausführungsbeispiel weist die Aufhängevorrichtung 100 das Steckelement 135 auf, das in dem hier gezeigten durch die zweite Durchgangsöffnung 130 und das Langloch 110 durchgeführten Fixierzustand dazu ausgebildet ist, ein Drehen der Einstellmutter 120 zu verhindern. Gemäß diesem Ausführungsbeispiel ist die zweite Durchgangsöffnung 130 quer zu der Längsachse des Gewindelochs der Einstellmutter 120 ausgerichtet. Gemäß diesem Ausführungsbeispiel durchdringt die zweite Durchgangsöffnung 130 die Einstellmutter 120 vollständig, wobei die Längsachse der Durchgangsöffnung 130 die Längsachse des Gewindelochs schneidet. Das Langloch 110 erstreckt sich gemäß diesem Ausführungsbeispiel entlang des gesamten Durchmessers des Gewindebolzens 105 durch den Gewindebolzen 105 hindurch. Das Langloch 110 schneidet dabei die Längsachse des Gewindebolzens 105. Auf diese Weise kann das Steckelement 135 vollständig durch die zweite Durchgangsöffnung 130 hindurchgeführt werden, wobei ein freies Ende Steckelements 135 aus der zweiten Durchgangsöffnung 130 herausragen kann.

Gemäß einem alternativen Ausführungsbeispiel verläuft die zweite Durchgangsöffnung 130 lediglich von einer Außenwand der Einstellmutter 120 bis zu dem Gewindeloch der Einstellmutter 120. Auf diese Weise kann das Steckelement 135 nicht vollständig durch die zweite Durchgangsöffnung 130 hindurchgeführt werden, wobei dennoch eine drehsichere Fixierung der Einstellmutter 120 möglich ist. In diesem Fall kann das Langloch 110 lediglich als eine Nut in dem Gewindebolzen 105 ausgeformt sein, die den Gewindebolzen 105 nicht vollständig durchdringt.

Das Steckelement 135 ist gemäß diesem Ausführungsbeispiel als ein Schenkel eines Federsteckers 155 ausgeformt. Ein weiterer Schenkel 160 des Federsteckers 155 klemmt gemäß diesem Ausführungsbeispiel an oder gegen einen Schlüsselflächenabschnitt einer Schlüsselfläche der Einstellmutter 120. Die Schlüsselfläche ist gemäß diesem Ausführungsbeispiel sechskantig ausgestaltet.

Gemäß diesem Ausführungsbeispiel weist ein Außengewinde des Gewindebolzens 105 und/oder das Innengewinde der Einstellmutter 120 eine Gewindesteigung von zwei Millimetern auf. Ein Länge des Langlochs 110 in Richtung der Längsachse kann an einen gewünschten Verstellbereich der Magnetschienenbremse angepasst sein. Beispielsweise beträgt die Länge des Langlochs 110 zwischen 2cm und 10cm.

Die hier vorgestellte Aufhängevorrichtung 100 ermöglicht vorteilhafterweise eine einfache Nachstellung von Magnetschienenbremsen in Tiefaufhängung. Aufgrund von Verschleiß an den Rädern eines Fahrzeugs sowie an den Magnetschienenbremsen selbst ändert sich mit der Zeit ein Abstand zwischen der Magnetschienenbremse und der Fahrschiene. Um diesen Abstand wieder auf einen vordefinierten Wert einzustellen, soll in regelmäßigen Abständen eine Höhenlage von Magnetkörpern dem Verschleißzustand der Räder sowie der Magnetschienenbremse angepasst werden. Hierzu wird die Einstellmutter 120, welche den Magnetkörper auf dem Gewindebolzen 105 in Form einer Gewindestange der Aufhängung trägt, verdreht und damit der Magnetkörper der Magnetschienenbremse höhenverstellt. Um im Betrieb eine unerwünschte selbstständige Höhenverstellung der Magnetkörper und damit einen unerwünschten Abstand zur Fahrschiene zu vermeiden, ist das Steckelement 135 als Verdrehsicherung durch eine Bohrung in der Einstellmutter 120 sowie das Langloch 110 gesteckt und geführt. Durch das Langloch 110 im Gewindebolzen 105 sichert der Federstecker 155 die Einstellmutter 120 vor Verdrehen. Das Langloch 110 weist gemäß diesem Ausführungsbeispiel eine Erstreckungslänge entlang einer Länge des Gewindebolzens 105 von mehreren Zentimetern auf, gemäß einem Ausführungsbeispiel ist das Langloch 110 mindestens fünf Zentimeter lang. Anders als bei einer möglichen Variante, bei der eine Einstellmutter durch Verspannen mit einer Kontermutter auf einer Gewindestange verklemmt ist, ist ein Lösen der Verdrehsicherung bei der hier vorgestellten Aufhängevorrichtung 100 vorteilhafterweise lediglich durch Herausziehen des Steckelements 135, oder gemäß diesem Ausführungsbeispiel des Federsteckers 155, ermöglicht. Das Nachstellen sowie das Sichern der Schraubenverbindung erfordert bei der hier vorgestellten Aufhängevorrichtung 100 somit einen sehr geringen Arbeitsaufwand, da keine Werkzeuge zum Lösen einer Verklemmung notwenig sind und die Einstellmutter 120 auch anschließend nicht mehr verklemmt werden muss.

Die Aufhängevorrichtung 100 stellt ein einfaches System zur Schraubensicherung dar und bietet eine einfache Handhabung bei der Nachstellung der Magnetschienenbremse. Das Prinzip der einfachen Nachstellung beruht vorteilhafterweise anstelle einer reibschlüssigen auf einer formschlüssigen Verdrehsicherung der Einstellmutter 120. Durch die formschlüssige Sicherung der Einstellmutter 120 mittels des Federsteckers 155 ist diese einfache Nachstellung der Magnetschienenbremse ermöglicht, da ein Lösen oder Verklemmen von zwei Muttern nicht notwendig ist. Damit sind ein Arbeitsaufwand sowie eine Arbeitszeit bei der Nachstellung gering.

Die Aufhängevorrichtung 100 realisiert einen einfachen Nachstellmechanismus einer Druckfederaufhängung mit einem geringen Arbeitsaufwand sowie einer geringen Arbeitszeit für das Lösen von lediglich einer Einstellmutter 120. Anstatt einer möglichen Kontermutter wird zur Sicherung der Federstecker 155 verwendet, welcher die Einstellmutter 120 vor Verdrehen sichert. Der Federstecker 155 wird durch das Langloch 110 im Gewindebolzen 105 in Form eines Stellbolzens gesteckt und gemäß diesem Ausführungsbeispiel auf der Einstellmutter 120 in einer Nut auf der Schlüsselfläche der Einstellmutter 120 geführt. Die Einstellmutter 120 ist alle 180° durch den Federstecker 155 formschlüssig fixierbar. Zur Konterung ist lediglich ein Werkzeug notwendig. Die Aufhängevorrichtung 100 realisiert eine formschlüssige Höhenfixierung; damit ist ein selbstständiges Lockern und/oder unbeabsichtigtes Lösen der Einstellmutter 120 wesentlich unwahrscheinlicher als bei einer klemm- oder reibschlüssigen Variante. Eine mögliche Reibschlussverbindung wie eine Höhenfixierung mittels einer selbstsichernden Mutter erfordert einen regelmäßigen Austausch. Eine andere mögliche Reibschlussverbindung wie eine Höhenfixierung mittels einer Klemmschraube, welche durch eine Einstellmutter radial auf den Gewindebolzen geschraubt würde und damit die Einstellmutter verspannen könnte, erfordert gegenüber der hier vorgestellten Aufhängevorrichtung 100 mehr Bauteile und höhere Kosten. Klemm- und/oder Reibverbindungen sind zudem unter den gegebenen Randbedingungen, also bei schmutziger Umgebung oder undefinierten Reibbeiwerten, nicht so prozesssicher wie formschlüssige Verbindungen. Eine Teileanzahl ist bei der Aufhängevorrichtung 100 reduziert, da auf eine Kontermutter und/oder ein Keilscheibenpaar verzichtet werden kann. Insgesamt schafft die hier vorgestellte Erfindung zudem Vorteile bei den Lebensdauerkosten, da Federstecker 155 als Tauschteil sehr günstig sind.

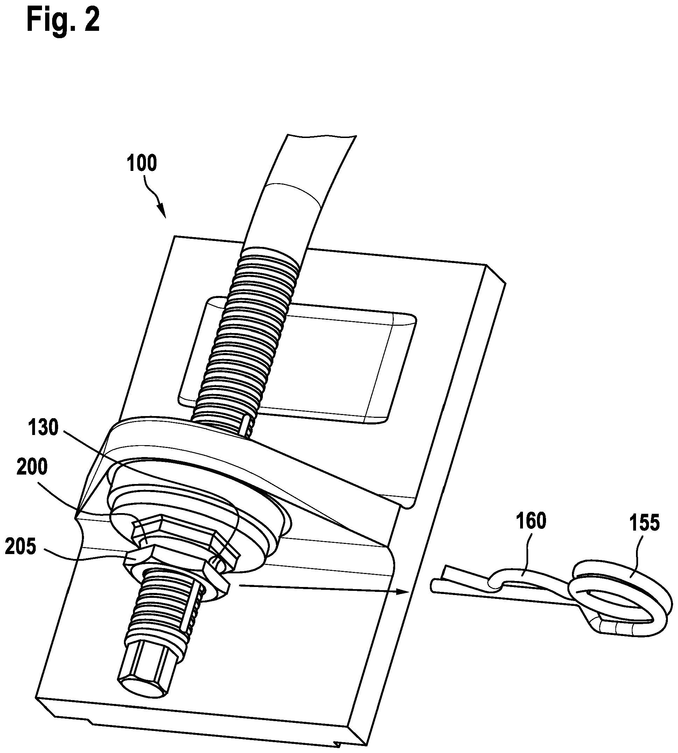

**Fig. 2** zeigt eine perspektivische Seitendarstellung einer Aufhängevorrichtung 100 für eine Magnetschienenbremse für ein Schienenfahrzeug gemäß einem Ausführungsbeispiel. Dabei kann es sich um die anhand von Fig. 1 beschriebene Aufhängevorrichtung 100 handeln, mit dem Unterschied, dass der Federstecker 155 gemäß diesem Ausführungsbeispiel nicht in dem Fixierzustand dargestellt ist, sondern von der Einstellmutter 120 und dem Gewindebolzen gelöst angeordnet ist.

Zu erkennen ist in Fig. 2, dass die Einstellmutter 120 eine Nut 200 zum Anlegen des weiteren Schenkels 160 des Federsteckers 155 aufweist. Die Nut 200 ist gemäß diesem Ausführungsbeispiel umlaufend und/oder mittig und/oder ringförmig um die Innengewindebohrung der Einstellmutter120 verlaufend in der Schlüsselfläche 205 der Einstellmutter 120 angeordnet. Gemäß einem alternativen Ausführungsbeispiel ist die Nut 200 lediglich in einen Schlüsselflächenabschnitt der Schlüsselfläche 205 angeordnet. Ein Abschnitt des weiteren Schenkels 160 des Federsteckers 155 weist eine konvexe Ausformung auf, die dazu ausgeformt ist, um im Fixierzustand des Federsteckers 155 in oder an die Nut 200 zu greifen. Somit ist der Federstecker 155 im Fixierzustand an der Nut 200 in der Einstellmutter 120 geführt. Dargestellt ist gemäß diesem Ausführungsbeispiel ein herausgezogener Zustand des Federsteckers 155, um die Verdrehsicherung der Einstellmutter 120 zu lösen.

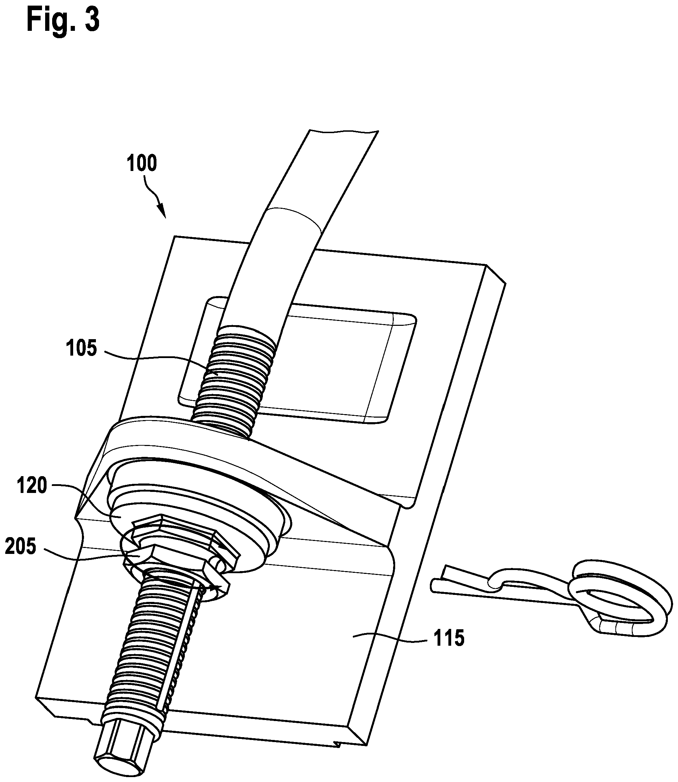

**Fig. 3** zeigt eine perspektivische Seitendarstellung einer Aufhängevorrichtung 100 für eine Magnetschienenbremse für ein Schienenfahrzeug gemäß einem Ausführungsbeispiel. Dabei kann es sich um die anhand von Fig. 1 oder 2 beschriebene Aufhängevorrichtung 100 in dem in Fig. 2 beschriebenen herausgezogenen Zustand des Federsteckers handeln, mit dem Unterschied, dass die Einstellmutter 120 verdreht wurde und somit eine Position der Anbindungseinrichtung 115 an dem Gewindebolzen 105 verändert wurde.

Durch das Verdrehen der Einstellmutter 120 wurde der Gewindebolzen 105 vertikal verstellt. Die Einstellmutter 120 ist gemäß diesem Ausführungsbeispiel pro halbe Umdrehung durch den Federstecker sicherbar. Gemäß diesem Ausführungsbeispiel entspricht das einer Einstellung in 1-Millimeter-Schritten. Die Schlüsselfläche 205 der Einstellmutter 120 ist für die Nachstellung mittels eines Standard-Werkzeugs geeignet.

Wie durch den Doppelpfeil gekennzeichnet, lässt sich die Einstellmutter 120 in beide Richtungen drehen, sodass die Magnetschienenbremse angehoben oder abgesenkt werden kann.

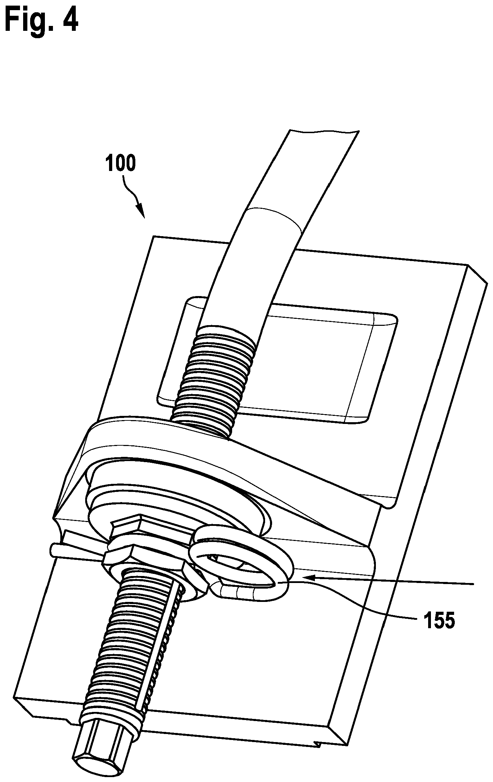

**Fig. 4** zeigt eine perspektivische Seitendarstellung einer Aufhängevorrichtung 100 für eine Magnetschienenbremse für ein Schienenfahrzeug gemäß einem Ausführungsbeispiel. Dabei kann es sich um die anhand von Fig. 3 beschriebene Aufhängevorrichtung 100 handeln, bei der eine Position der Anbindungseinrichtung verändert wurde, mit dem Unterschied, dass nun der Federstecker 155 wieder in dem Fixierzustand angeordnet ist.

Der Federstecker 155 wurde gemäß diesem Ausführungsbeispiel nach Verdrehen der Einstellmutter wieder eingesteckt. Der Federstecker 155 bewirkt nun erneut eine Verdrehsicherung in einer neuen Einstellposition des Gewindebolzens.

**Fig. 5** zeigt eine schematische seitliche Darstellung eines Schienenfahrzeugs 500 mit einer Magnetschienenbremseinrichtung 505 mit einer Aufhängevorrichtung 100 gemäß einem Ausführungsbeispiel. Dabei kann es sich um eine der anhand von Fig. 1 bis 4 beschriebenen Aufhängevorrichtungen 100 handeln, mit dem Unterschied, dass die Aufhängevorrichtung 100 gemäß diesem Ausführungsbeispiel einen weiteren Gewindebolzen 510, eine weitere Anbindungseinrichtung 515 und eine weitere Einstellmutter 520 aufweist.

Die Magnetschienenbremseinrichtung 505 weist die Aufhängevorrichtung 100 und eine Magnetschienenbremse 525 auf. Die Magnetschienenbremse 525 ist gemäß diesem Ausführungsbeispiel zwischen der Anbindungseinrichtung 115 und der weiteren Anbindungseinrichtung 515 gekoppelt. Ein Abstand der Magnetschienenbremse 510 zu der Schiene ist demnach gemäß diesem Ausführungsbeispiel an zwei gegenüberliegenden Enden der Magnetschienenbremse 525 veränderbar. Zum Koppeln der Magnetschienenbremse 525 mit den Anbindungseinrichtungen 115, 515 sind geeignete mechanische Verbindungen vorgesehen. Alternativ können die Magnetschienenbremse 525 und die Anbindungseinrichtungen 115, 515 auch einstückig ausgeformt sein.

Der weitere Gewindebolzen 510, die weitere Anbindungseinrichtung 515 und die weitere Einstellmutter 520 können entsprechend dem Gewindebolzen 105, der Anbindungseinrichtung 115 und der Einstellmutter 120 ausgeformt sein.

Entsprechend weist der weitere Gewindebolzen 510 gemäß diesem Ausführungsbeispiel ein weiteres Langloch auf. Die weitere Anbindungseinrichtung 515 ist zum Anbinden der Magnetschienenbremse 510 zwischen der Anbindungseinrichtung 115 und der weiteren Anbindungseinrichtung 515 ausgeformt, die eine dritte Durchgangsöffnung zum Durchführen des weiteren Gewindebolzens 510 aufweist. Die weitere Einstellmutter 520 weist ein weiteres Innengewinde auf, das an den weiteren Gewindebolzen 510 schraubbar ausgeformt ist, um eine weitere Position der weiteren Anbindungseinrichtung 515 an dem weiteren Gewindebolzen 510 axial verstellbar zu machen. Die weitere Einstellmutter 120 weist gemäß diesem Ausführungsbeispiel zum drehsicheren Fixieren der weiteren Einstellmutter 520 an dem weiteren Gewindebolzen 510 zumindest eine vierte Durchgangsöffnung zum Aufnehmen eines durch das weitere Langloch durchführbaren weiteren Steckelements auf.

Die Aufhängevorrichtung 100 ist gemäß einem Ausführungsbeispiel an zwei Seiten mittels zweier Zug- oder Druckfederaufhängungseinrichtungen 530 an einem Drehgestellrahmen 535 des Schienenfahrzeugs 500 gelagert. Gemäß einem Ausführungsbeispiel sind die Gewindebolzen 105, 510 an einer den Einstellmuttern 120, 520 abgewandten Seite mit dem Drehgestellrahmen des Schienenfahrzeugs 500 gekoppelt. Beispielsweise sind die Anbindungseinrichtungen 115, 515 als Bügel oder Abschnitte von Bügeln ausgeformt, die mit der Magnetschienenbremse 525 verbunden sind und durch die sich von dem Drehgestellrahmen heraberstreckende Mitnehmer geführt sind.

Gemäß dem gezeigten Ausführungsbeispiel ist die Aufhängung der der Magnetschienenbremse 525 achsfest ausgeführt. Alternativ kann die Aufhängung drehgestellfest realisiert sein.

**Fig. 6** zeigt ein Ablaufdiagramm eines Verfahrens 600 zum Ändern einer Position einer Anbindungseinrichtung einer Aufhängevorrichtung gemäß einem Ausführungsbeispiel. Dabei kann es sich um eine der anhand von Fig. 1 bis 5 beschriebenen Aufhängevorrichtungen handeln.

Das Verfahren 600 weist einen Schritt 605 des Herausziehens, einen Schritt 610 des Drehens und einen Schritt 615 des Einsteckens auf. Im Schritt 605 des Herausziehens wird das Steckelement der Aufhängevorrichtung aus der zweiten Durchgangsöffnung der Einstellmutter und dem Langloch des Gewindebolzens herausgezogen. Im Schritt 610 des Drehens wird die Einstellmutter an eine gewünschte Position an dem Gewindebolzen gedreht, um die Position der Anbindungseinrichtung zu verändern. Im Schritt 615 des Einsteckens wird das Steckelement in die zweite Durchgangsöffnung und das Langloch eingesteckt, um die Einstellmutter drehsicher an dem Gewindebolzen zu fixieren.

Die hier vorgestellten Verfahrensschritte können wiederholt sowie in einer anderen als in der beschriebenen Reihenfolge ausgeführt werden. Die Verfahrensschritte können unter Verwendung einer geeigneten Einrichtung auch teil- oder vollautomatisiert ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Aufhängevorrichtung
- 105: Gewindebolzen
- 110: Langloch
- 115: Anbindungseinrichtung
- 120: Einstellmutter
- 125: erste Durchgangsöffnung
- 130: zweite Durchgangsöffnung
- 135: Steckelement
- 140: Anschlusselement
- 145: Vorsprung
- 150: Hülse
- 155: Federstecker
- 160: weiterer Schenkel

- 200: Nut
- 205: Schlüsselfläche

- 500: Schienenfahrzeug
- 505: Magnetschienenbremseinrichtung
- 510: weiterer Gewindebolzen
- 515: weitere Anbindungseinrichtung
- 520: weitere Einstellmutter
- 525: Magnetschienenbremse
- 530: Zug- oder Druckfederaufhängungseinrichtung
- 535: Drehgestellrahmen

- 600: Verfahren zum Ändern einer Position einer Anbindungseinrichtung einer Aufhängevorrichtung
- 605: Schritt des Herausziehens
- 610: Schritt des Drehens
- 615: Schritt des Einsteckens

## Patentansprüche

1. Aufhängevorrichtung (100) für eine Magnetschienenbremse (525) für ein Schienenfahrzeug (500), wobei die Aufhängevorrichtung (100) die folgenden Merkmale aufweist:
einen Gewindebolzen (105);
eine Anbindungseinrichtung (115) zum Anbinden der Magnetschienenbremse (525), wobei die Anbindungseinrichtung (115) eine erste Durchgangsöffnung (125) zum Durchführen des Gewindebolzens (105) aufweist; und
eine Einstellmutter (120) mit einem Innengewinde, das an den Gewindebolzen (105) schraubbar ausgeformt ist, um eine Position der Anbindungseinrichtung (115) an dem Gewindebolzen (105) axial verstellbar zu machen,
**dadurch gekennzeichnet, dass**
der Gewindebolzen (105) ein Langloch (110) aufweist und die Einstellmutter (120) zum drehsicheren Fixieren der Einstellmutter (120) an dem Gewindebolzen (105) zumindest eine zweite Durchgangsöffnung (130) zum Aufnehmen eines durch das Langloch (110) durchführbaren Steckelements (135) aufweist.

2. Aufhängevorrichtung (100) gemäß Anspruch 1, mit dem Steckelement (135), das in einem durch die zweite Durchgangsöffnung (130) und das Langloch (110) durchgeführten Fixierzustand dazu ausgebildet ist, um ein Drehen der Einstellmutter (120) zu verhindern.

3. Aufhängevorrichtung (100) gemäß einem der vorangegangenen Ansprüche, bei der das Steckelement (135) als ein Schenkel eines Federsteckers (155) ausgeformt ist.

4. Aufhängevorrichtung (100) gemäß Anspruch 3, bei der die Einstellmutter (120) eine Nut (200) zum Anlegen eines weiteren Schenkels (160) des Federsteckers (155) aufweist.

5. Aufhängevorrichtung (100) gemäß Anspruch 4, bei der die Nut (200) umlaufend in einer Schlüsselfläche (205) der Einstellmutter (120) angeordnet ist.

6. Aufhängevorrichtung (100) gemäß einem der vorangegangenen Ansprüche, bei der ein Außengewinde des Gewindebolzens (105) eine Gewindesteigung von anderthalb oder zwei Millimetern aufweist.

7. Aufhängevorrichtung (100) gemäß einem der vorangegangenen Ansprüche, mit einem weiteren Gewindebolzen (510) mit einem weiteren Langloch, einer weiteren Anbindungseinrichtung (515) zum Anbinden der Magnetschienenbremse (525) zwischen der Anbindungseinrichtung (115) und der weiteren Anbindungseinrichtung (515), die eine dritte Durchgangsöffnung zum Durchführen des weiteren Gewindebolzens (510) aufweist, und einer weiteren Einstellmutter (520) mit einem weiteren Innengewinde, das an den weiteren Gewindebolzen (510) schraubbar ausgeformt ist, um eine weitere Position der weiteren Anbindungseinrichtung (515) an dem weiteren Gewindebolzen (510) axial verstellbar zu machen, wobei die weitere Einstellmutter (520) zum drehsicheren Fixieren der weiteren Einstellmutter (520) an dem weiteren Gewindebolzen (510) zumindest eine vierte Durchgangsöffnung zum Aufnehmen eines durch das weitere Langloch durchführbaren weiteren Steckelements aufweist.

8. Magnetschienenbremseinrichtung (505) mit einer Magnetschienenbremse (525) und einer Aufhängevorrichtung (100) gemäß Anspruch 7, wobei die Magnetschienenbremse (525) zwischen der Anbindungseinrichtung (115) und der weiteren Anbindungseinrichtung (515) angeordnet oder anordenbar ist.

9. Schienenfahrzeug (500) mit einer Magnetschienenbremseinrichtung (505) gemäß Anspruch 8.

10. Verfahren (600) zum Ändern einer Position einer Anbindungseinrichtung (115) einer Aufhängevorrichtung (100) gemäß einem der Ansprüche 1 bis 7, **dadurch gekennzeichnet, dass** das Verfahren (600) die folgenden Schritte umfasst:
Herausziehen (605) des Steckelements (135) aus der zweiten Durchgangsöffnung (130) der Einstellmutter (120) und dem Langloch (110) des Gewindebolzens (105);
Drehen (610) der Einstellmutter (120) an eine gewünschte Position an dem Gewindebolzen (105), um die Position der Anbindungseinrichtung (115) zu verändern; und
Einstecken (615) des Steckelements (135) in die zweite Durchgangsöffnung (130) und das Langloch (110), um die Einstellmutter (120) drehsicher an dem Gewindebolzen (105) zu fixieren.

## Claims

1. Suspension device (100) for a magnetic rail brake (525) for a rail vehicle (500), wherein the suspension device (100) has the following features:
a threaded bolt (105)
a connecting device (115) for connecting the magnetic rail brake (525), wherein the connecting device (115) has a first through-going opening (125) through which the threaded bolt (105) can pass; and
an adjusting nut (120) with an internal thread, which is fitted by screwing onto the threaded bolt (105) in order to enable a position of the connecting device (115) on the threaded bolt (105) to be adjusted axially,
**characterised in that**
the threaded bolt (105) has a slot (110) and the adjusting nut (120) has at least one second slot (130) for receiving an insertion element (135) that can pass through the slot (110) in order to fix the adjusting nut (120) in a rotationally fixed manner on the threaded bolt (105).

2. Suspension device (100) according to Claim 1, with the insertion element (135) which, when inserted into a fixing position by passing it through the second through-going opening (130) and into the slot (110), is designed to prevent any rotation of the adjusting nut (120).

3. Suspension device (100) according to either of the preceding claims, in which the insertion element (135) is in the form of an arm of a spring cotter pin (155).

4. Suspension device (100) according to Claim 3, in which the adjusting nut (120) has a groove (200) for accommodating another arm (160) of the spring cotter pin (155).

5. Suspension device (100) according to Claim 4, in which the groove (200) is formed in a key surface (205) of the adjusting nut (120).

6. Suspension device (100) according to any of the preceding claims, in which the external thread of the threaded bolt (105) has a thread pitch of one-and-a-half or two millimetres.

7. Suspension device (100) according to any of the preceding claims, having a further threaded bolt (510) with a further slot, a further connecting device (515) for connecting the magnetic rail brake (525) between the connecting device (115) and the further connecting device (515), which has a third through-going opening for passing through the further threaded bolt (510), and a further adjusting nut (520) with a further internal thread which is fitted by screwing onto the further threaded bolt (510), in order to enable axial adjustment of a further position of the further connecting device (515) on the further threaded bolt (510), wherein to fix the further adjusting nut (520) in a rotationally fixed manner on the further threaded bolt (510) the further adjusting nut (520) has at least one fourth through-going opening for receiving a further insertion element that can be passed through the further slot.

8. Magnetic rail brake device (505) with a magnetic rail brake (525) and a suspension device (100) according to Claim 7, wherein the magnetic rail brake (525) is or can be arranged between the connecting device (115) and the further connecting device (515).

9. Rail vehicle (500) with a magnetic rail brake device (505) according to Claim 8

10. Method (600) for changing a position of a connecting device (115) of a suspension device (100) according to any of Claims 1 to 7, **characterised in that** the method comprises the following steps:
pulling the insertion element (135) out of the second through-going opening (130) of the adjusting nut (120) and the slot (110) of the threaded bolt (105);
turning (610) the adjusting nut (120) to a desired position on the threaded bolt (105), and
inserting (615) the insertion element (135) into the second through-going opening (130) and the slot (110) in order to fix the adjusting nut (120) on the threaded bolt (105) in a rotationally fixed manner.

## Revendications

1. Installation (100) de suspension d'un frein (525) électromagnétique sur rail d'un véhicule (500) ferroviaire, l'installation (100) de suspension ayant les caractéristiques suivantes :
un boulon (105) fileté ;
un dispositif (115) de rattachement pour rattacher le frein (525) électromagnétique sur rail, dans lequel le dispositif (115) de rattachement a une première ouverture (125) de passage pour le passage du boulon (105) fileté ; et
un écrou (120) de réglage ayant un taraudage, qui est conformé de manière à pouvoir se visser sur le boulon (105) fileté, afin de rendre réglable axialement une position du dispositif (115) de rattachement sur le boulon (105) fileté,
**caractérisé**
**en ce que** le boulon (105) fileté a un trou (110) oblong et l'écrou (120) de réglage a, pour l'immobilisation en rotation de l'écrou (120) de réglage sur le boulon (105) fileté, au moins une deuxième ouverture (130) de passage de réception d'un élément (135) d'enfichage pouvant passer dans le trou (110) oblong.

2. Installation (100) de suspension suivant la revendication 1, comprenant l'élément (135) d'enfichage, qui, dans un état d'immobilisation effectué par la deuxième ouverture (130) de passage et par le trou (110) oblong, est constitué pour empêcher une rotation de l'écrou (120) de réglage.

3. Installation (100) de suspension suivant l'une des revendications précédentes, dans laquelle l'élément (135) d'enfichage est conformé sous la forme d'une branche d'un connecteur (155) à ressort.

4. Installation (100) de suspension suivant la revendication 3, dans laquelle l'écrou (120) de réglage a une rainure (200) pour l'application d'une autre branche (160) du connecteur (155) à ressort.

5. Installation (100) de suspension suivant la revendication 4, dans laquelle la rainure (200) est disposée en faisant le tour, dans une surface (205) de clé de l'écrou (120) de réglage.

6. Installation (100) de suspension suivant l'une des revendications précédentes, dans laquelle un filetage extérieur du boulon (105) fileté à un pas de filet d'un millimètre et demi ou de deux millimètres.

7. Installation (100) de suspension suivant l'une des revendications précédentes, comprenant un autre boulon (510) fileté ayant un autre trou oblong, un autre dispositif (515) de rattachement, pour le rattachement du frein (525) électromagnétique sur rail, entre le dispositif (115) de rattachement et l'autre dispositif (515) de rattachement, qui a une troisième ouverture de passage pour le passage de l'autre boulon (510) fileté, et un autre écrou (520) de réglage ayant un autre taraudage, qui est conformé de manière à pouvoir se visser sur l'autre boulon (510) fileté afin de rendre réglable axialement une autre position de l'autre dispositif (515) de rattachement sur l'autre boulon (510) fileté, dans lequel l'autre écrou (520) de réglage a, pour l'immobilisation à l'encontre de la rotation de l'autre écrou (520) de réglage, sur l'autre boulon (510) fileté, au moins une quatrième ouverture de passage de réception d'un autre élément d'enfichage pouvant passer dans l'autre trou oblong.

8. Dispositif (505) de frein électromagnétique sur rail, comprenant un frein (525) électromagnétique sur rail et une installation (100) de suspension suivant la revendication 7, dans lequel le frein (525) électromagnétique sur rail est disposé entre le dispositif (115) de rattachement et l'autre dispositif (515) de rattachement ou peut l'être.

9. Véhicule (500) ferroviaire comprenant un dispositif (505) de frein électromagnétique sur rail suivant la revendication 8.

10. Procédé (600) de modification d'une position d'un dispositif (115) de rattachement d'une installation (100) de suspension suivant l'une des revendications 1 à 7, **caractérisé en ce que** le procédé (600) comprend les stades suivants :
retrait (605) de l'élément (135) d'enfichage de la deuxième ouverture (130) de passage de l'écrou (120) de réglage et du trou (110) oblong du boulon (105) fileté ;
rotation (610) de l'écrou (120) de réglage à une position souhaitée sur le boulon (105) fileté, afin de modifier la position du dispositif (115) de rattachement ; et
enfichage (615) de l'élément (135) d'enfichage dans la deuxième ouverture (130) de passage et dans le trou (110) oblong, pour immobiliser l'écrou (120) de réglage sans qu'il puisse tourner sur le boulon (105) fileté.
